# EUROPEAN PATENT SPECIFICATION

(11) **EP 1 602 535 B1**
(45) Date of publication and mention of the grant of the patent: **22.08.2007**
(21) Application number: 05011868.6
(22) Date of filing: 01.06.2005
(51) Int. Cl.: B60R 21/26

(54) **Gas generator for air bag**
Gasgenerator für Airbag
Générateur de gaz pour airbag

(30) Priority: 03.06.2004 JP 2004166306
(43) Date of publication of application: 07.12.2005
(73) Proprietor: DAICEL CHEMICAL INDUSTRIES, LTD., Sakai-shi, Osaka (JP)
(72) Inventor: Tokuda, Masakazu, Himeji-shi, Hyogo (JP); Yabuta, Mikio, Himeji-shi, Hyogo (JP)
(74) Representative: Grünecker, Kinkeldey, Stockmair & Schwanhäusser Anwaltssozietät

(56) References cited:
- WO-A-20/04031003
- US-A1- 2002 109 339
- US-A1- 2003 168 841

## Description

The present invention relates to a gas generator according to the preamble of claim 1. This gas generator is suitable for use in an air bag system installed in an automotive vehicle.

An gas generator of the above-specified type is known from US 2002/109339 A1.

An air bag system is known as a device for protecting passengers from impact when a vehicle collides. In an air bag system, a gas is introduced into an air bag instantaneously so that the air bag inflates, and hence the air bag system functions as buffering means between the passenger and the constitutional components of the vehicle (the steering wheel, for example).

In recent years, air bag systems for the driver side, the front passenger side, side collisions, a vehicle roll, and so on have been proposed with the aim of improving passenger safety against the impact that is generated during a vehicle collision. A gas generator used in these air bag systems should satisfy a condition of being able to generate gas instantaneously, but with respect to the system for side collisions in particular, the gap between the constitutional components of the vehicle and the passenger is narrow, and hence the period from perception of the impact to the start of gas discharge into the air bag has to be short. Moreover, the gas generator should have a thin structure in the width direction due to problems regarding the mounting space for the gas generator. Likewise in air bag systems for use during vehicle roll (curtain air bags), the gas generator requires a thin structure in the width direction due to problems regarding mounting space.

US-A No. 2002/0109339 is cited as background art relating to the present invention.

### Summary of the Invention

To solve these problems, an aspect of the present invention is to provide a gas generator for an air bag, in particular a gas generator for a side (side collision protection) air bag, a gas generator for a curtain air bag, or another small gas generator or the like, which has a simple structure and is suitable for mounting in particularly small spaces.

The present invention is described as being used in a gas generator for an air bag for side collisions or a gas generator for a curtain air bag, in which the period from perception of the collision to the start of gas discharge should be short. However, the present invention is not necessarily limited thereto, and may be used in gas generators for air bags for a driver side, a front passenger side, or a knee-bolster.

An aspect of the present invention is to provide a gas generator for an air bag wherein, in an inflator housing comprising a bottle portion storing a pressurized medium and a diffuser attached to one end portion of the bottle portion and formed, in an axial direction thereof, with a gas outlet being closed by a rupturable plate, an ignition means for rupturing the rupturable plate is fixed to an igniter collar to face the rupturable plate, and attached to the diffuser, a first gas discharge hole is formed in the igniter collar such that the pressurized medium discharged through the gas outlet is discharged in a substantially axial direction of the inflator housing, and the ignition means and first gas discharge hole are off-center respectively from the center of the igniter collar.

Gas generators include those using only pressurized gas (stored gas generators), those using a solid gas generating agent (pyrotechnic gas generators), and those using both pressurized gas and a solid gas generating agent (hybrid gas generators). Stored gas generators and hybrid gas generators comprise a rupturable plate for sealing the pressurized medium in the interior of the housing. When the rupturable plate is ruptured, discharge of the gas (ejection of the gas into the air bag) begins. By means of this mechanism, the period from perception of an impact to the start of gas discharge is short, which is advantageous for the aforementioned hybrid gas generator or stored gas generator. It is therefore assumed that the present invention relates to stored gas generators and hybrid gas generators.

The pressurized medium is sealed inside the bottle portion. One end of the bottle portion is closed, and the diffuser is attached to the opposite end portion, thus forming the inflator housing. Here, the term "one end side of the bottle is closed" signifies that a component which is open prior to assembly of the gas generator is closed by a spinning method or Mannesmann method, or by attaching a separate member. Alternatively, a commercially available component having one closed end portion prior to assembly of the gas generator may be used.

The opposite end portion of the bottle is open, and in this case, the diffuser is attached thereto. A gas outlet for discharging the pressurized medium in the bottle is formed in the diffuser, and preferably disposed to open in the axial direction of the bottle. The gas outlet is blocked by the rupturable plate prior to an operation of the gas generator. Instead of blocking the gas outlet in the diffuser with the rupturable plate, a part of the opposite end portion of the bottle may be opened and then closed by the rupturable plate.

Further, the igniter collar to which the ignition means for rupturing the rupturable plate are attached is incorporated into the diffuser. At this time, the ignition means is disposed to face the rupturable plate. The first gas discharge hole is formed in the igniter collar. The first gas discharge hole is formed in the igniter collar such that when the igniter collar is attached to the diffuser, the pressurized medium is discharged in the substantially axial direction of the housing. The first gas discharge hole may be formed in the thickness direction of the igniter collar, for example. Note that the ignition means and the first gas discharge hole are off-center from the center of the igniter collar. By disposing the ignition means and first gas discharge hole in this manner, the width of the gas generator in the radial direction can be reduced, and hence the gas generator can be mounted even in the narrow spaces of the vehicle. Here, the term "substantially axial direction" indicates that the axis of the housing and the axial direction of the first gas discharge hole are essentially parallel, but as long as the pressurized medium flows substantially in the axial direction of the housing, these two axes may intersect and still be included in the term "substantially axial direction" in the present invention.

Hence, the gas outlet is formed to open in the axial direction of the housing and closed by the rupturable plate, while the ignition means is disposed to face the rupturable plate, and therefore the ignition means is attached from the substantially axial direction of the housing. As a result, no components protrude in the width direction (radial direction) of the gas generator, and hence the gas generator is released from mounting space restrictions.

Moreover, since the first gas discharge hole is formed in the igniter collar and opened such that the gas is discharged in the substantially axial direction of the housing, no components in the gas discharging part protrude in the width direction of the housing, and therefore the gas generator can be mounted easily in a comparatively narrow mounting space.

Note that the attachment orientation of the ignition means facing the rupturable plate is preferably set such that the central axis of the ignition means is parallel to the axial direction of the inflator housing. However, there are no particular limitations on the orientation of the ignition means as long as the ignition means is capable of rupturing the rupturable plate, and as long as no protrusions are formed in the width direction of the housing.

Further, in the gas generator of the present invention, the ignition means is preferably constituted only by an electric igniter which activates upon reception of an ignition signal, the electric igniter is preferably formed integrally with the igniter collar using a resin, and the igniter collar is preferably attached to the diffuser by crimping.

By constituting the ignition means only by an electric igniter, the constitution of the gas generator is simplified. Further, by fixing the igniter to the igniter collar with resin, the igniter assembly (a combination of the igniter collar and igniter) can be produced easily.

Moreover, by fixing the igniter collar to the diffuser by crimping, welding heat and the like are not used, and hence construction can be performed safely. Particularly in cases where the electric igniter and the joining locations are in close proximity, welding heat may cause inadvertent ignition or melting of the resin. With a crimping method, however, such problems do not arise.

Also in the gas generator of the present invention, positioning means is preferably formed on at least one of the igniter collar and the diffuser so that the electric igniter and the rupturable plate are oriented to face each other.

In so doing, the igniter collar and diffuser can be assembled and positioned easily. The positioning means may be constituted by forming a convex portion (or concave portion) in the igniter collar and forming a corresponding concave portion (or convex portion) in the diffuser such that the igniter collar can be set in only one orientation in relation to the diffuser, or by forming the entire igniter collar in a gourd shape, a deformed elliptical shape, a non-symmetrical shape, and so on, and forming the diffuser in a corresponding shape.

Further, in the gas generator of the present invention, a tubular gas discharge port having one closed end portion is preferably also attached to the part of the igniter collar in which the first gas discharge hole is formed, and a large number of second gas discharge holes is preferably formed in the peripheral wall surface of the gas discharge port near to this closed end portion at equal intervals in the circumferential direction.

By using the tubular gas discharge port, connection to the air bag is simplified. The second gas discharge holes formed in the peripheral wall surface of one end portion of the gas discharge port are preferably disposed to counterbalance thrust. In so doing, the gas generator can be prevented from shooting forward like a rocket even when operated unintentionally during conveyance. Note that when the gas discharge port is fixed to the igniter collar, this fixing operation may be performed using welding (a well-known welding method such as resistance welding), a method of forming a screw on the gas discharge port and screwing the gas discharge port to the igniter collar, or a method of providing an outward-facing flange on the open end portion of the gas discharge port, providing an annular protrusion on the igniter collar, and fixing the two together by crimping.

The entirety or part of the gas discharge port and the igniter collar may be formed from an integral component. For example, such a structure may be employed that the peripheral wall portion including an open tip end is provided in the igniter collar such that the peripheral wall portion surrounds the first gas discharge hole, and the gas discharge port which has one end closed portion and formed with second gas discharge holes on the peripheral wall portion is fixed to it by using the method described above. Alternatively, such a structure may be employed that the tip end of the peripheral wall portion thereof, extending from the first gas discharge hole, is open, the second gas discharge holes are formed in the peripheral wall portion toward this open end portion, and the open end is blocked at the closure of a separate member.

Also in the gas generator of the present invention, a preferable structure of the electric igniter is that an ignition charge is disposed in the electric igniter on a header portion carrying a heat generating portion which is caused to generate heat by an ignition current, the ignition charge being disposed in contact with the heat generating portion, and that the electric igniter is preferably closed tightly by a bottomed cup attached to the header portion, the bottom of the bottomed cup serving as a fragile site.

The heat generating portion that is caused to generate heat by an ignition current is formed in the header portion of the igniter, and the ignition charge is disposed on the header portion in contact with the heat generating portion and sealed tightly by the bottomed cup. The fragile portion ruptures and breaks at least initially during an activation of the electric igniter, but it is preferable that parts other than the fragile portion do not rupture and break even after the igniter activation. To form the fragile site, at least part of the bottom of the cup may be formed more thinly than the peripheral wall part so that only the bottom part breaks easily, or a notch may be formed in the bottom of a cup having a constant thickness. Substantially identical effects to those of a cup having a thicker peripheral wall part are exhibited when the cup thickness is constant and an annular reinforcement is disposed on the inside of the cup (on the header).

By providing the fragile site on at least part, or the entirety, of the cup bottom, the generation direction of the flame, impact wave, and high-temperature gas produced when the ignition charge is ignited can be restricted. By placing the rupturable plate in this direction, the energy generated by the igniter can be concentrated on the rupturable plate, and therefore the inflator can be operated reliably.

By means of the present invention, problems relating to the mounting space of a gas generator can be solved effectively. Even when mounting space is restricted, particularly in the case of a gas generator for a side collision or curtain air bag system, the gas generator can be mounted and fixed securely.

### BRIEF DESCRIPTION OF THE DRAWINGS

Fig. 1 is a cross-sectional view of a gas generator for an air bag of the present invention.
Fig. 2 is an enlarged cross-sectional view of an igniter collar part of the present invention.
Fig. 3 is an enlarged view of the igniter collar part of the present invention.
Fig. 4 is an enlarged view showing another aspect of the igniter collar part of the present invention.

### DECSRIPTION OF REFERENCE NUMERALS

- 100: gas generator
- 10: bottle
- 20: diffuser
- 21: gas outlet
- 22: rupturable plate
- 26: igniter
- 27: igniter collar
- 32: first gas discharge hole
- 37: annular portion
- 40: gas discharge port

### Detailed Description of the Invention

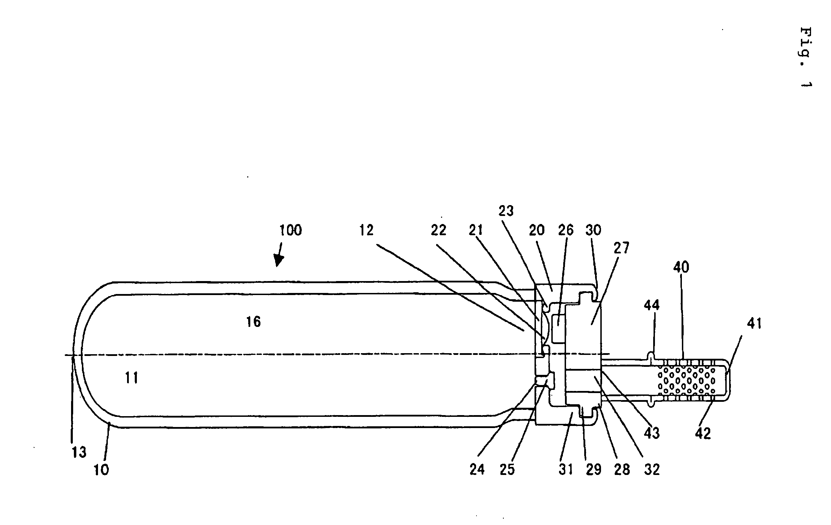

The present invention will be described in detail below using the drawings which illustrate an embodiment of the present invention. Fig. 1 is a cross-sectional view showing an embodiment of a gas generator 100 of the present invention.

In the gas generator 100 of the present invention, a bottle 10 storing a pressurized medium 11 for inflating an air bag has an opening portion 12 on one end, the other end thereof is closed, and the pressurized medium, constituted by an inert gas such as argon or helium, nitrogen gas, or carbon dioxide, is charged into an interior space 16 at a charging pressure of approximately 30,000 to 70,000kPa. The bottle 10 has a circular cross section in the width direction, and the opening portion 12 takes a similar circle form. However, there are no particular limitations on the forms thereof, and hence these cross sectional forms may be polygonal. The shape of the housing is preferably symmetrical with respect to a central axis 13.

A known gas cylinder may be used as the bottle 10, or the bottle 10 may be produced by subjecting a pipe to swaging, spinning, or Mannesmann processing to close one end (the end portion on the left side of Fig. 1) thereof.

A diffuser 20 is attached to the opening portion 12 of the bottle 10. In the diffuser 20, a gas outlet 21 for discharging the pressurized medium in the interior of the bottle 10 is blocked by a rupturable plate 22. The rupturable plate 22 is fixed to an inwardly protruding part 23 formed on the gas outlet 21 of the diffuser 20 by a welding method such as resistance welding, and a central portion of the rupturable plate 22 is caused to expand outward by the pressure of the pressurized medium 11 in the interior of the bottle 10.

Further, a charging nozzle 24 for charging the pressurized medium into the interior of the bottle is formed in the diffuser 20. Following charging of the pressurized medium, the charging nozzle 24 is sealed with a pin 25. The pin 25 is fixed to the diffuser 20 by welding. As a result, the pressurized medium 11 is tightly sealed in the interior (interior space 16) of the bottle 10.

Alternatively, the charging nozzle 24 may be provided on the bottle 10 and sealed by the pin 25 in the same manner. Alternatively, a structure is possible in which the charging nozzle 24 is not provided in either the bottle 10 or the diffuser 20 and the pressurized medium is charged through the opening portion 12 of the bottle 10. In this case, the gas outlet 21 is sealed in advance by the rupturable plate 22, the diffuser 20 is placed in the vicinity of the opening portion 12, the pressurized medium 11 is charged, and once a predetermined amount of the pressurized medium 11 has been charged, the opening portion 12 is closed by the diffuser 20. In the gas generator 100 of Fig. 1, the diffuser portion 20 (with the gas outlet 21 blocked by the rupturable plate 22) is connected to the bottle 10, whereupon the pressurized medium 11 is charged through the gap for the pin 25 attached to the charging nozzle 24 (the gap formed between the pin 25 and the charging nozzle 24), and then the pin 25 is welded to the diffuser 20 to close the nozzle completely.

The bottle 10 and diffuser 20 may be connected by welding, or by providing a male screw portion on the outer peripheral surface of the end portion of the bottle 10, providing a female screw portion on the inner peripheral surface of the end portion of the diffuser portion 20, and screwing the male screw portion and female screw portion together.

An igniter 26 having an ignition charge is provided in the diffuser portion 20 as rupturing means for rupturing the rupturable plate 22. The igniter 26 is fitted into and attached to the diffuser 20. When attaching the igniter 26 to the diffuser 20, the igniter 26 is first attached to an igniter collar 27, and then the igniter collar 27 is attached to an opening portion 28 formed in the diffuser 20. At this time, the igniter 26 is attached to face the rupturable plate 22. An annular protruding portion 29 is formed on a peripheral wall portion of the igniter collar 27. The annular protruding portion 29 is disposed to abut against a stepped portion 31 of the diffuser 20, and then fixed thereto by crimping 30. In Fig. 1, the igniter 26 is disposed in an off-center position from the center of the igniter collar 27. This is to enable the igniter 26 to be attached in a position facing the rupturable plate 22 (gas outlet 21), which is disposed in an off-center position from the center of the diffuser 20. In so doing, the energy generated by the igniter 26 impinges on the rupturable plate 22 efficiently, and hence the rupturable plate 22 can be ruptured reliably. Note, however, that as long as the rupturable plate 22 is ruptured reliably by the igniter 26, the igniter 26 may be disposed at an incline to the rupturable plate 22, or the respective centers of the rupturable plate 22 and igniter 26 may be slightly offset.

When the igniter collar 27 is attached to the diffuser 20, the attachment operation should be performed such that the igniter 26 faces the rupturable plate 22, and it is therefore preferable that positioning means be formed. The positioning means serve to restrict the attachment orientation of the igniter collar 27 to the diffuser 20, and is obtained, for example, by forming a convex portion (or concave portion) on the periphery of the igniter collar 27 and forming a corresponding concave portion (or convex portion) on the diffuser 20. Alternatively, by forming the entire igniter collar 27 in a non-symmetrical shape and forming the opening portion 28 of the diffuser 20 in a corresponding shape, the igniter collar 27 can be attached to the diffuser 20 in a fixed orientation. These positioning means will be described later.

A first gas discharge hole 32 is also formed in the igniter collar 27 to discharge the pressurized medium that passes through the gas outlet 21 to the exterior of the gas generator. The first gas discharge hole 32 is also disposed in an off-center position from the center of the igniter collar 27. More specifically, the igniter collar 27 is attached with the igniter 26 for rupturing the rupturable plate 22, and formed with the first gas discharge hole 32 for discharging the pressurized medium from the interior of the bottle 10 to the outside, and by disposing the igniter 26 and first gas discharge hole 32 in this manner, the dimension of the gas generator 100 in the height direction (the vertical direction in Fig. 1) can be suppressed. As a result, the entire gas generator 100 is reduced in size (reduced in thickness) such that the gas generator can be mounted on parts of the vehicle interior which have a restricted gas generator mounting space. The outer form of the diffuser 20 is preferably smaller than the maximum outer diameter of the bottle.

Due to the disposal relationships of the gas outlet 21 and rupturable plate 22 with the first gas discharge hole 32, the flow of pressurized medium through the interior of the diffuser 20 is complicated (zigzag). Hence, even if fragments of the rupturable plate or the like flow together with the pressurized medium, these fragments can be trapped easily in the interior of the diffuser 20.

Further, a gas discharge port 40 having one closed end 41 is connected to the igniter collar 27, and a plurality of second gas discharge holes 42 is formed on the peripheral wall portion on the end portion side of the closed end 41. By connecting the air bag (not shown) to this part, the pressurized medium can be discharged from the gas generator 100 into the interior of the air bag. The gas discharge port 40 is fixed and connected to the igniter collar 27 at an open end portion 43 thereof by a welding method such as resistance welding. Note that a convex portion 44 is formed on the gas discharge port 40, and by attaching the air bag to engage with this convex portion 44 and fixing the air bag around the peripheral wall portion of the gas discharge port 40 using a band, the air bag can be prevented from become disengaged from the gas discharge port during an operation.

Note that a sealing member such as an O-ring may be disposed on the contact surface between the igniter collar 27 and diffuser 20 (between the protruding portion 29 and stepped portion 31), for example, to ensure that all of the pressurized medium inside the bottle 10 is discharged through the first gas discharge hole 32 (and supplied only to the air bag) during an operation of the gas generator 100.

The gas discharge port 40 is attached such that the central axis of the bottle 10 (shown by the dot/dash line in Fig. 1) and the central axis of the gas discharge port 40 are parallel.

The gas discharge port 40 also functions as a filter for removing foreign matter (for example, fragments of the rupturable plate 22) by means of the second gas discharge holes 42 formed on the other end side thereof. Alternatively, the opening diameter of the second gas discharge holes 42 may be formed to be larger, and punched metal, expanded metal, wire mesh, or the like formed with a large amount of small holes may be disposed on the inside of the second gas discharge holes 42 to serve as a filter. There are no particular limitations on the location of the filter as long as foreign matter in the flowing pressurized medium can be removed.

The second gas discharge holes 42 are preferably provided uniformly around the peripheral wall portion of the gas discharge port 40. In so doing, thrust generated when the gas generator 100 is operated unintentionally during transport or conveyance is counterbalanced, and hence the gas generator can be prevented from shooting forward like a rocket.

Note that in the embodiment shown in Fig. 1, the total opening area of the second gas discharge holes 42 is set to be larger than the opening area of the first gas discharge hole 32. Moreover, the first gas discharge hole 32 is set to be smaller than the gas outlet 21, and thus the outflow amount of the pressurized medium is regulated by the first gas discharge hole 32.

Also in the embodiment of Fig. 1, by forming the second gas discharge holes 42 at a remove from the end 41 of the gas discharge port 40 (preferably, at a distance equal to or greater than the radius of the rupturable plate 22), the end 41 part functions as a pocket for trapping foreign matter (fragments of the rupturable plate 22, for example), and hence this is preferable.

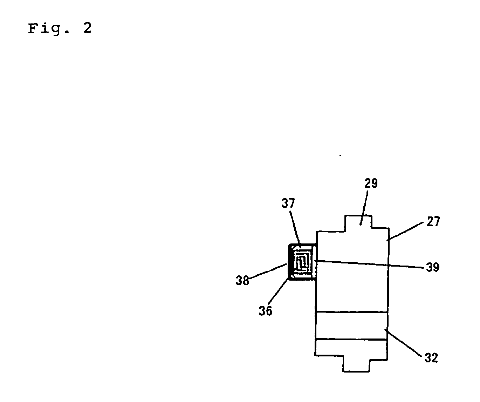

To enhance the rupturability of the rupturable plate 22 in the gas generator 100 of this embodiment, an annular portion 37 is provided to envelop the ignition charge 36 from the periphery thereof as shown in Fig. 2, and the side of the annular portion 37 which faces the rupturable plate 22 is left open. The annular portion 37 is formed from the same material as a metallic header 39, or may be formed integrally with the header 39. A bridge wire (not shown) for generating heat by means of the ignition current is attached to the header 39, and the ignition charge 36 is ignited by this bridge wire. The annular portion 37 provides directivity to a detonation wave generated by combustion of the ignition charge. Note that the reference numeral 38 denotes a cup for closing the opening of the annular portion 37. To ensure that the part closing the opening portion of the annular portion 37 ruptures easily during an activation of the igniter 26, the thickness of the cup may be adjusted (by making the bottom part of the cup thinner than the peripheral wall part), or a notch may be provided in the bottom part of the cup.

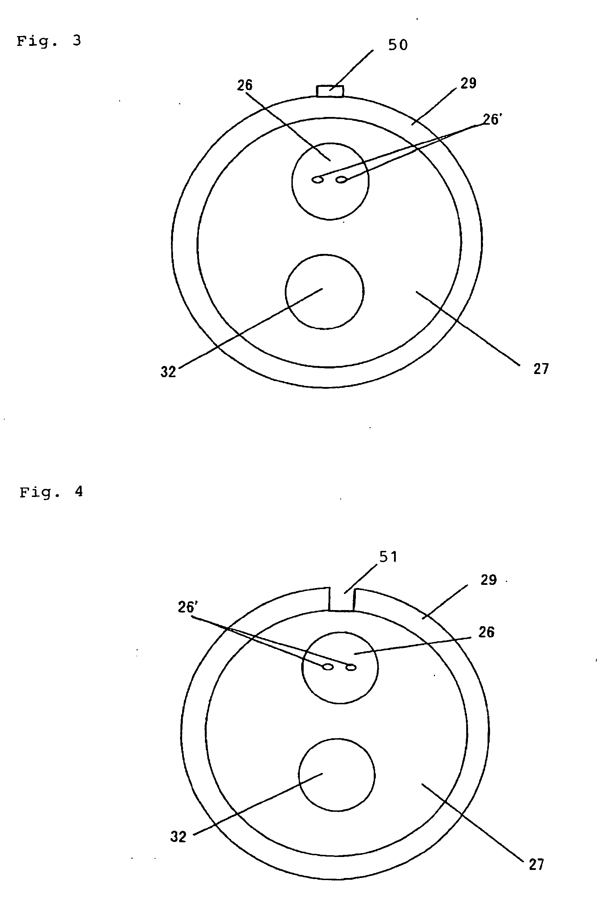

Figs. 3 and 4 show examples in which positioning means are formed on the igniter collar 27 so that when the igniter collar 27 is attached to the diffuser 20, the igniter 26 and rupturable plate 22 are disposed facing each other at all times. Both Fig. 3 and Fig. 4 show an outline of the structure shown in Fig. 2 when seen from the right side of Fig. 2.

In the structure shown in Fig. 3, the igniter 26 and the first gas discharge hole 32 are formed on the circular igniter collar 27 on the upper side and lower side, respectively. Note that the reference numeral 26' denotes an electroconductive pin for transmitting the ignition current to the igniter.

In Fig. 3, the protruding portion 29 is formed around the peripheral surface of the igniter collar 27, and a positioning portion 50 is formed to protrude further than the protruding portion 29. Meanwhile, a concave portion (not shown) corresponding to the protrusion of the positioning portion 50 is formed in the part of the diffuser 20 in which the igniter collar 27 is incorporated, and by disposing the igniter collar 27 in the interior of the diffuser 20 such that the positioning portion 50 fits to the concave portion, the igniter 26 and rupturable plate 22 are disposed to face each other at all times.

In Fig. 4, a part of the protrusion 29 formed around the peripheral surface of the igniter collar 27 is cut away, and this part acts as a positioning portion 51. More specifically, a convex portion (not shown) corresponding to the cut-away portion of the positioning portion 51 is formed in the part of the diffuser 20 in which the igniter collar 27 is incorporated, and by disposing the igniter collar 27 in the interior of the diffuser 20 such that the positioning portion 51 fits to the convex portion, the igniter 26 and rupturable plate 22 are disposed to face each other at all times.

Next, an operation of the gas generator 100 of the present invention will be described. When installed in a vehicle, the gas generator 100 is installed as a system combining operating signal output means constituted by an impact sensor, a control unit, a module case accommodating the gas generator 100 and an air bag, and so on. The air bag is connected at the second gas discharge holes 42 part of the gas discharge port 40.

First, when the vehicle receives an impact, an impact sensor receives the signal from the system, thereby operating the igniter 26 to ignite and burn the ignition charge such that the rupturable plate 22 is ruptured.

When the rupturable plate 22 ruptures, the gas outlet 21 opens, and hence the pressurized medium in the interior space 16 flows out through the first gas discharge hole 32, into the gas discharge port 40, and through the second gas discharge holes 42 to inflate the air bag.

The gas generator of the present invention may be used as a gas generator in an air bag system for use in side collisions, a curtain air bag system, and so on, or as a gas generator for a driver side air bag system, a front passenger side air bag system, a knee-bolster system, or an inflatable seat belt.

Note that the gas generator shown in Fig. 1 uses only a pressurized medium, but the present invention may be applied to a hybrid type gas generator which also uses a solid gas generating agent.

The invention thus being described, it will be obvious that the same may be varied in many ways.

## Claims

1. A gas generator (100) for an air bag wherein, in an inflator housing comprising a bottle portion (10) storing a pressurized medium (11) and a diffuser (20) attached to one end portion of the bottle portion (10) and formed, in an axial direction thereof, with a gas outlet (21) being closed by a rupturable plate (22), an ignition means (26) for rupturing the rupturable plate (22) is fixed to an igniter collar (27) to face the rupturable plate (22), and attached to the diffuser (20), a first gas discharge hole(32) is formed in the igniter collar (27) such that the pressurized medium (11) discharged through the gas outlet (21) is discharged in a substantially axial direction of the inflator housing, and the first gas discharge hole (32) is off-center from the center of the igniter collar (27),
**characterized in that** also the ignition means (26) is off-center from the center of the igniter collar(27).

2. The gas generator (100) for an air bag according to claim 1, wherein the ignition means (26) comprises only an electric igniter (26) which activates upon reception of an ignition signal, the electric igniter (26) is formed integrally with the igniter collar (27) using a resin, and the igniter collar (27) is attached to the diffuser (20) by crimping (30).

3. The gas generator (100) for an air bag according to claim 1 or 2, wherein positioning means (50,51) is formed on at least one of the igniter collar (27) and the diffuser (20) so that the electric igniter (26) and the rupturable plate (22) are oriented to face each other.

4. The gas generator (100) for an air bag according to claim 1 or 2, wherein a tubular gas discharge port (40) having one closed end portion (41) is also attached to the part of the igniter collar (27) in which the first gas discharge hole(32) is formed, and a large number of second gas discharge holes (42) is formed in a peripheral wall surface near to the closed end portion (41) of the gas discharge port (40) at equal intervals in the circumferential direction.

5. The gas generator (100) for an air bag according to claim 1 or 2, wherein, in the electric igniter (26), an ignition charge (36) is disposed on a header portion (39) carrying a heat generating portion which is caused to generate heat by an ignition current, the ignition charge (36) being disposed in contact with the heat generating portion, and the ignition charge (36) is sealed tightly by a bottomed cup (38) attached to the header portion (39), the bottom of the bottomed cup (38) serving as a fragile site.

## Patentansprüche

1. Ein Gasgenerator (100) für einen Airbag, wobei, in einem Gehäuse einer Aufblasvorrichtung, umfassend einen Flaschenabschnitt (10) zum Speichern eines mit Druck beaufschlagten Mediums (11) und einem Diffuser (20), der an einem endseitigen Abschnitt des Flaschenabschnitts (10) angebracht ist, und der in einer axialen Richtung davon mit einem Gasauslass (21) ausgebildet ist, der durch eine aufbrechbare Platte (22) verschlossen ist, ein Zündmittel (26) zum Aufbrechen der aufbrechbaren Platte (22) an einer Manschette (27) für die Zündvorrichtung fixiert ist, um der aufbrechbaren Platte (22) zugewandt zu sein, und an dem Diffuser (20) angebracht ist, und eine erste Gasauslassöffnung (32) in der Manschette (27) für die Zündvorrichtung derart ausgebildet ist, dass das durch den Gasauslass (21) abgelassene und mit Druck beaufschlagte Medium (21) im Wesentlichen in einer axialen Richtung des Gehäuses der Aufblasvorrichtung abgelassen wird, wobei die erste Gasauslassöffnung (32) exzentrisch von der Mitte der Manschette (27) für die Zündvorrichtung angeordnet ist,
**dadurch gekennzeichnet, dass** auch das Zündmittel (26) exzentrisch von der Mitte der Manschette (27) für die Zündvorrichtung angeordnet ist.

2. Der Gasgenerator (100) für einen Airbag gemäß Anspruch 1, wobei das Zündmittel (26) nur eine elektrische Zündvorrichtung (26) aufweist, welche nach Erfassung eines Zündsignals aktiviert wird, wobei die elektrische Zündvorrichtung (26) unter Verwendung eines Kunststoffs in einer integralen Art und Weise mit der Manschette (27) für die Zündvorrichtung ausgebildet ist, und wobei die Manschette (27) für die Zündvorrichtung durch Crimpen (30) an dem Diffuser (20) angebracht ist.

3. Der Gasgenerator (100) für einen Airbag gemäß Anspruch 1 oder 2, wobei ein Positioniermittel (50, 51) an zumindest einem Element der Manschette (27) für die Zündvorrichtung und dem Diffuser (20) ausgebildet ist, so dass die elektrische Zündvorrichtung (26) und die aufbrechbare Platte (22) derart ausgerichtet sind, um einander zugewandt zu sein.

4. Der Gasgenerator (100) für einen Airbag gemäß Anspruch 1 oder 2, wobei ein rohrförmiger Gasauslasskanal (40) mit einem geschlossenen, endseitigen Abschnitt (41) ebenfalls an dem Teil der Manschette (27) für die Zündvorrichtung angebracht ist, in welchem die erste Gasauslassöffnung (32) ausgebildet ist, wobei eine große Anzahl von zweiten Gasauslassöffnungen (42) in einer umfangsseitigen Wandoberfläche in der Nähe des geschlossenen, endseitigen Abschnitts (41) des Gasauslasskanals (40) in gleichmäßigen Abständen in der um den Umfang verlaufenden Richtung ausgebildet ist.

5. Der Gasgenerator (100) für einen Airbag gemäß Anspruch 1 oder 2, wobei, in der elektrischen Zündvorrichtung (26), eine Zündladung (36) an einem Kopfabschnitt (39) angeordnet ist, welche einen Hitze erzeugenden Abschnitt trägt, welcher durch einen Zündstrom dazu gebracht wird, eine Hitze zu erzeugen, wobei die Zündladung (36) in Kontakt mit dem Hitze erzeugenden Abschnitt angeordnet ist, und wobei die Zündladung (36) in einer dichten Art und Weise abgedichtet ist unter Verwendung einer mit einem Boden versehenen Schale (38), die an dem Kopfabschnitt (39) angebracht ist, wobei der Boden der mit dem Boden versehenen Schale (38) als eine zerbrechliche Stelle dient.

## Revendications

1. Générateur (100) de gaz destiné à un coussin de sécurité gonflable dans lequel, dans un boîtier de gonfleur comprenant une partie (10) formant une bouteille contenant un milieu (11) sous pression et un diffuseur (20) attaché à une partie d'extrémité de la partie (10) formant une bouteille et doté, selon une direction axiale de celui-ci, d'une sortie (21) de gaz refermée par une plaque cassable (22), un moyen d'allumage (26) permettant de casser la plaque cassable (22) est fixé à un collier (27) d'allumeur pour faire face à la plaque cassable (22), et attaché au diffuseur (20), un premier alésage (32) de décharge de gaz se trouvant dans le collier (27) d'allumeur, de sorte que le milieu (11) sous pression déchargé à travers la sortie (21) de gaz soit déchargé selon une direction sensiblement axiale du boîtier de gonfleur, et où le premier alésage (32) de décharge de gaz est excentré du centre du collier (27) d'allumeur, **caractérisé en ce que** le moyen d'allumage (26) est excentré par rapport au centre du collier (27) d'allumeur.

2. Générateur (100) de gaz destiné à un coussin de sécurité gonflable selon la revendication 1, dans lequel le moyen d'allumage (26) est uniquement constitué d'un allumeur électrique (26) qui s'active lors de la réception d'un signal d'allumage, cet allumeur électrique (26) étant venu de matière avec le collier (27) d'allumeur par le biais d'une résine, et où le collier (27) d'allumeur est attaché au diffuseur (20) par un sertissage (30).

3. Générateur (100) de gaz destiné à un coussin de sécurité gonflable selon la revendication 1 ou 2, dans lequel un moyen de positionnement (50, 51) se trouve au moins sur le collier (27) d'allumeur ou sur le diffuseur (20), afin que l'allumeur électrique (26) et la plaque cassable (22) soient orientés de manière à se faire face.

4. Générateur (100) de gaz destiné à un coussin de sécurité gonflable selon la revendication 1 ou 2, dans lequel un orifice tubulaire (40) de décharge de gaz comportant une partie (41) d'extrémité fermée est également attaché à la partie du collier (27) d'allumeur dans lequel se trouve le premier alésage (32) de décharge de gaz, et où un grand nombre de deuxièmes alésages (42) de décharge de gaz se trouvent dans une surface formant une paroi périphérique proche de la partie (41) d'extrémité fermée de l'orifice (40) de décharge de gaz, à des intervalles égaux dans la direction circonférentielle.

5. Générateur (100) de gaz destiné à un coussin de sécurité gonflable selon la revendication 1 ou 2, dans lequel, une charge (36) d'allumage se trouve dans l'allumeur électrique (26), sur une partie de tête (39) portant une partie productrice de chaleur, qui est amenée à produire de la chaleur sous l'effet d'un courant d'allumage, la charge (36) d'allumage étant disposée en contact avec la partie productrice de chaleur et la charge (36) d'allumage étant enfermé hermétiquement avec force par une coupelle (38) à fond attachée à la partie de tête (39), le fond de la coupe (38) à fond constituant un site fragile.
